# EUROPÄISCHE PATENTSCHRIFT

(11) **EP 4 570 455 B1**
(45) Veröffentlichungstag und Bekanntmachung des Hinweises auf die Patenterteilung: **23.09.2026**
(21) Anmeldenummer: 24215686.7
(22) Anmeldetag: 27.11.2024
(51) Int. Cl.: H01F 7/04, B25J 15/00, B25B 11/00, B25J 15/02, B25J 15/06, B25J 15/08, B65G 47/92, B66C 1/04, H01F 7/20

(54) **MAGNETGREIFER**
MAGNETIC GRIPPER
PINCE MAGNÉTIQUE

(30) Priorität: 15.12.2023 DE 102023135329
(43) Veröffentlichungstag der Anmeldung: 18.06.2025
(73) Patentinhaber: Liebherr-Verzahntechnik GmbH, 87437 Kempten (DE)
(72) Erfinder: GROSS, Jürgen, 71672 Marbach am Neckar (DE)
(74) Vertreter: Lorenz Seidler Gossel Part. mbB

(56) Entgegenhaltungen:
- EP-B1- 1 732 838
- DE-A1- 102022 111 527
- FR-A- 1 496 195
- JP-A- S5 464 353
- KR-A- 20210 048 910
- US-A1- 2020 114 444

## Beschreibung

Die vorliegende Erfindung betrifft einen Magnetgreifer mit einer schaltbaren Magnetflussquelle, zwei mit der Magnetflussquelle in magnetischer Verbindung stehenden Polstücken und mindestens zwei Greifelementen, welche jeweils mit einem der beiden Polstücke in magnetisch leitender Verbindung stehen.

Magnetgreifer werden in vielen Anwendungen eingesetzt, um weichmagnetische Gegenstände zu greifen. Liegen die beiden Greifelemente auf dem weichmagnetischen Gegenstand auf und werden daher durch diesen magnetisch leitend verbunden, entsteht ein Magnetkreis, durch welchen beim eingeschalteter Magnetflussquelle ein magnetischer Fluss hindurchgeht. Hierdurch entsteht eine Haltekraft zwischen den Greifelementen und dem weichmagnetischen Gegenstand.

Aus Druckschrift WO 2023/191914 A1 ist ein Magnetgreifer bekannt, bei welchem weichmagnetische Greifstifte eingesetzt werden, welche in Bohrungen der Polstücke federbelastet beweglich gelagert sind und daher beim Aufsetzen des Magnetgreifers auf einen Gegenstand nachgegeben können, um so eine an die Kontur des zu greifenden Gegenstands angepasste Greifkontur zu bilden.

Allerdings es ist mit der aus der WO 2023/191914 A1 gezeigten Lösung jedenfalls nicht zuverlässig möglich, Gegenstände so zu greifen, dass diese mittels des Magnetgreifers beispielsweise mit ausreichender Sicherheit aus einem Behälter entnommen werden könnten, in welchem diese ungeordnet vorliegen.

Druckschrift DE 10 2022 111527 A1 zeigt ebenfalls einen Magnetgreifer nach dem Oberbegriff von Anspruch 1. Weiterer Stand der Technik ist aus Druckschriften US 2020/114444 A1, JP S54 64353 A, KR 2021 0048910 A, FR 1 496 195 A und EP 1 732 838 B1 bekannt.

Aufgabe der vorliegenden Erfindung ist es daher, einen verbesserten Magnetgreifer zur Verfügung zu stellen.

Diese Aufgabe wird durch die Magnetgreifer gemäß Anspruch 1 gelöst. Bevorzugte Ausgestaltungen der vorliegenden Erfindung sind Gegenstand der Unteransprüche.

Die vorliegende Erfindung umfasst einen Magnetgreifer mit einer schaltbaren Magnetflussquelle, zwei mit der Magnetflussquelle in magnetischer Verbindung stehenden Polstücken und mindestens zwei Greifelementen, welche jeweils mit einem der beiden Polstücke in magnetisch leitender Verbindung stehen, wobei die mindestens zwei Greifelemente bei ausgeschalteter Magnetflussquelle beweglich und/oder verformbar an dem Magnetgreifer angeordnet sind, so dass sie mit ihren Frontflächen eine Greifkontur bilden, welche an die Kontur eines zu greifenden Gegenstands anpassbar ist. Die vorliegende Erfindung ist dadurch gekennzeichnet, dass der Magnetgreifer eine Isolierung umfasst, welche die mindestens zwei Greifelemente umgibt und diese zur Seite hin magnetisch isoliert.

Der Erfinder der vorliegenden Erfindung hat erkannt, dass bei der aus der WO 2023/191914 A1 oder DE 10 2022 111527 A1 gezeigten Lösung ein zuverlässiges Greifen einzelner Gegenstände auch deshalb nicht möglich ist, weil nicht nur die Frontflächen der Greifstifte eine magnetische Anziehungskraft auf die zu greifenden weichmagnetischen Gegenstände ausüben, sondern auch die Seitenflächen der Greifstifte, so dass zusätzlich zu jenem Gegenstand, welcher gegriffen werden soll, oftmals auch andere Gegenstände an den Greiffingern anhaften oder zumindest mitbewegt werden und den zu greifenden Gegenstand daher abscheren.

Durch die erfindungsgemäße Isolierung, welche die mindestens zwei Greifelemente umgibt und diese zur Seite hin magnetisch isoliert, wird ein solches seitliches Anhaften weiterer Gegenstände verhindert und daher die Greifeigenschaften des Magnetgreifers entscheidend verbessert.

Die Isolierung kann hierbei die Greifelemente jeweils einzeln umgeben, und/oder die Gesamtheit der Greifelemente umgeben. Sie lässt jedoch in jedem Fall zumindest die Frontflächen der Greifelemente frei, so dass diese weiterhin eine Greifkontur bilden können.

Gemäß einer möglichen Ausgestaltung der vorliegenden Erfindung dient die Isolierung zunächst einmal dazu, dass Gegenstände nicht seitlich mit dem weichmagnetischen Material der Greifelemente in Kontakt treten können und daher durch den Abstand zu dem weichmagnetischen Material der Greifelemente auch keine Greifkräfte auftreten, durch welche die Gegenstände anhaften könnten. Weiterhin darf die Isolierung ihrerseits keine Greifkräfte erzeugen, d.h. sie darf jedenfalls nicht magnetisch leitend mit dem Magnetflussquelle in Verbindung stehen.

Gemäß einer möglichen Ausgestaltung der vorliegenden Erfindung umfasst die Isolierung ein nicht-magnetisches und/oder magnetisch isolierendes Material. Insbesondere besteht jedenfalls die Außenseite der Isolierung aus einem nicht-magnetischen und/oder magnetisch isolierendem Material. Als nicht-magnetisches und/oder magnetisch isolierendes Material kann beispielsweise Aluminium, Kunststoff und/oder Gummi eingesetzt werden.

Gemäß einer möglichen Ausgestaltung der vorliegenden Erfindung ist der Magnetgreifer hierbei so ausgestaltet, dass die Greifelemente in ihrer Position und/oder Form fixiert werden können, insbesondere durch Anlegen eines Magnetfeldes durch Einschalten und/oder teilweises Einschalten der Magnetflussquelle.

Bevorzugt ist der Magnetgreifer hierbei so ausgestaltet, dass die Magnetflussquelle nach einem Greifen nur teilweise ausgeschaltet wird und der Magnetgreifer die Greifkontur daher beibehält. Die Stärke des durch die Magnetflussquelle erzeugten Magnetfeldes wird daher nach dem Greifen so weit reduziert, dass die verbleibende Greifkraft zu gering ist, um den Gegenstand zu greifen, aber ausreicht, um die Greifelemente in ihrer Position und/oder Form zu fixieren.

Die Form und/oder Position der Greifelemente und damit die durch ihre Frontflächen definierte Greifkontur ist hierdurch speicherbar, so dass der Magnetgreifer mit einer spezifisch an ein Werkstück angepassten Greifgeometrie ausgestattet werden kann, welche sich im Betrieb nicht verändert.

Insbesondere kann die Greifkontur des Magnetgreifers daher entweder extern vorgeformt werden oder die Form des zuerst gegriffenen Gegenstands beibehalten. Das Greifen aller (weiteren) Gegenstände mittels dieser Greifkontor erfolgt sodann bevorzugt mit einer durch die Greifkontur vordefinierten, lagerichtigen Relativposition zum Gegenstand.

Gemäß einer möglichen Ausgestaltung der vorliegenden Erfindung ist die Isolierung jedenfalls bei ausgeschalteter Magnetflussquelle beweglich und/oder verformbar an dem Magnetgreifer angeordnet. Dies erlaubt es, dass nicht nur die Greifelemente mit ihren Frontflächen eine Greifkontur bilden, welche an die Kontur eines zu greifenden Gegenstands anpassbar ist, sondern auch die Isolierung an die Kontur des zu greifenden Gegenstands und/oder die Position und/oder den Verformungszustand der Greifelemente anpassbar ist und daher die Greifelemente unabhängig von deren Position und/oder Verformungszustand sicher seitlich isoliert.

Insbesondere kann die Isolierung so beweglich und/oder verformbar sein, dass eine Frontfläche der Isolierung auf dem zu greifenden Gegenstand aufliegt, wenn dieser gegriffen wird, und/oder sich an den Verformungszustand der Greifelemente anpasst.

Mögliche Ausgestaltungen der Greifelemente und der Isolierung, welche bei einem erfindungsgemäßen Magnetgreifer zum Einsatz kommen können, werden im folgenden beschrieben.

Gemäß einer möglichen Ausgestaltung der vorliegenden Erfindung werden die mindestens zwei Greifelemente durch Greifstifte gebildet, welche beweglich am Magnetgreifer gelagert sind.

Gemäß einer möglichen Ausgestaltung der vorliegenden Erfindung sind die Greifstifte linear beweglich am Magnetgreifer gelagert.

Gemäß einer möglichen Ausgestaltung der vorliegenden Erfindung sind die Greifstifte durch Federelemente in eine ausgefahrene Position vorgespannt.

**In** einer alternativen Ausgestaltung sind die Greifstifte ohne Vorspannung an dem Magnetgreifer gelagert und werden durch ihre Gewichtskraft aus dem Magnetgreifer ausgefahren.

Gemäß einer möglichen Ausgestaltung der vorliegenden Erfindung wird die Isolierung durch Isolierstifte gebildet, welche beweglich am Magnetgreifer gelagert sind und die Greifelemente umgeben. Insbesondere bilden die Isolierstifte daher eine beweglich am Magnetgreifer gelagerte Isolierung, welche die Greifstifte umgibt und daher seitlich nach außen hin von den zu greifenden Bauteilen trennt.

Gemäß einer möglichen Ausgestaltung der vorliegenden Erfindung sind die Isolierstifte linear beweglich am Magnetgreifer gelagert. Insbesondere sind die Isolierstifte hierbei in der gleichen Richtung beweglich wie die Greifstifte, falls die Greifelemente durch bewegliche Greifstifte gebildet werden.

Gemäß einer möglichen Ausgestaltung der vorliegenden Erfindung sind die Isolierstifte durch Federelemente in eine ausgefahrene Position vorgespannt.

Gemäß einer möglichen Ausgestaltung der vorliegenden Erfindung weisen die Isolierstifte jeweils eine Isolierhülle auf, welche einen weichmagnetischen Kern umgibt und zur Seite hin magnetisch isoliert. Die Isolierstifte haben hierdurch neben ihrer Isolierfunktion zusätzlich auch eine Greiffunktion.

Gemäß einer möglichen Ausgestaltung der vorliegenden Erfindung wird die Isolierung dadurch gebildet, dass die Greifstifte jeweils eine Isolierhülle aufweisen, welche einen weichmagnetischen Kern umgibt und zur Seite hin magnetisch isoliert. Insbesondere besteht die Isolierhülle hierfür aus einem magnetisch isolierenden Material. Bei dieser Ausgestaltung weisen daher die einzelnen Greifstifte selbst eine Isolierung auf. Die Isolierung ist hierbei bevorzugt starr mit dem weichmagnetischen Kern verbunden und bewegt sich daher bei einer Bewegung des Greifstiftes mit diesem mit.

Bei dieser Ausgestaltung ist die Isolierung daher dadurch beweglich am Magnetgreifer angeordnet, dass sie mit den einzelnen Greifstiften mit bewegbar ist.

Die Greifelemente der vorliegenden Erfindung können in einer möglichen Ausgestaltung bei ausgeschalteter Magnetflussquelle verformbar an dem Magnetgreifer angeordnet sein und insbesondere jeweils eine verformbare Frontfläche aufweisen, welche eine Greifkontur bildet, die an die Kontur eines zu greifenden Gegenstands anpassbar ist.

Insbesondere weisen die mindestens zwei Greifelemente bei ausgeschalteter Magnetflussquelle eine verformbare Frontfläche auf, welche eine Greifkontur bildet, die an die Kontur eines zu greifenden Gegenstands anpassbar ist. Durch diese Ausgestaltung liegt die Greifkontur damit nicht nur punktuell, sondern flächig an der Kontur eines zu greifenden Gegenstands an. Hierdurch sind größere Greifkräfte möglich. Weiterhin ist der Griff besser gegen ein seitliches Abscheren gesichert.

Gemäß einer möglichen Ausgestaltung der vorliegenden Erfindung ist der Magnetgreifer hierbei so ausgestaltet, dass die Greifelemente und insbesondere deren Frontflächen in ihrer Form fixiert werden können, insbesondere durch Anlegen eines Magnetfeldes durch Einschaltung und/oder teilweises Einschalten der Magnetflussquelle. Die Form der Greifelemente und insbesondere deren Frontflächen ist hierdurch speicherbar, so dass der Magnetgreifer mit einer spezifisch an ein Werkstück angepassten Greifgeometrie ausgestattet werden kann, welche sich im Betrieb nicht verändert.

Die Greifelemente und/oder deren Frontfläche bestehen hierbei bevorzugt aus einem weichmagnetischen Material, so dass die mit ihrer Frontfläche auf dem zu greifenden Gegenstand aufliegenden Greifelemente mit dem Gegenstand einen geschlossenen Magnetkreis aus weichmagnetischem Material bilden.

Gemäß einer möglichen Ausgestaltung der vorliegenden Erfindung werden die mindestens zwei Greifelemente durch flexible Hüllen gebildet, welche mit einem weichmagnetischen Granulat gefüllt sind. Hierdurch können sich die Greifelemente, liegt kein Magnetfeld an, an die Kontur des zu greifenden Gegenstands anpassen.

Wird der magnetische Fluss dagegen eingeschaltet, fixiert dies die Granulatkörner des weichmagnetischen Granulats aneinander. Bei einem teilweise Ausschalten der Magnetflussquelle sinkt das Magnetfeld bevorzugt nur so weit ab, dass der Gegenstand zwar nicht mehr gegriffen wird, die Granulatkörner aber weiterhin aneinander fixiert bleiben, so dass der Magnetgreifer seine Greifkontur beibehält.

Bei dem weichmagnetischen Granulat kann es sich um Kügelchen und/oder kantige Granulatkörner handeln. Werden kantige Granulatkörner eingesetzt, fördert dies ein Verhaken der Granulatkörner untereinander bei eingeschalteter Magnetflussquelle.

Die Frontfläche der Greifelemente und/oder die flexible Hülle der Greifelemente ist bevorzugt aus einem weichmagnetischen Material gefertigt.

Die Frontfläche der Greifelemente und/oder die flexible Hülle der Greifelemente kann beispielsweise aus einem Drahtgeflecht und/oder einem Kettenhemdmaterial gefertigt sein.

Gemäß einer möglichen Ausgestaltung der vorliegenden Erfindung reichen Polstifte in das Granulat hinein. Hierdurch wird der magnetische Fluss besonders gut von den Polstücken in das Granulat und von dort in den zu greifenden Gegenstand geleitet. Insbesondre wird hierdurch der Weg zwischen Polstück und zu greifendem Gegenstand, welcher durch das Granulat überbrückt werden muss, verringert und hierdurch die Greifkraft erhöht.

Die Polstifte können in einer ersten Ausgestaltung starr an dem Magnetgreifer angeordnet sein.

In einer zweiten Ausgestaltung sind die Polstifte beweglich am Magnetgreifer angeordnet. Insbesondere sind sie linear beweglich und/oder in eine ausgefahrene Position vorgespannt am Magnetgreifer gelagert. Die Polstifte drücken daher in das Granulat und sogar daher dafür, dass die flexible Hülle der Greifelemente immer ausreichend prall gefüllt ist und/oder der Abstand zum zu greifenden Bauteil reduziert wird, was die Greifkraft erhöht, da ein geringerer Abstand zu einer höheren Greifkraft führt.

Wie bereits oben beschrieben weist der erfindungsgemäße Magnetgreifer eine Isolierung auf, welcher die Greifelemente seitlich umgibt.

Gemäß einer möglichen Ausgestaltung werden hierbei Isolierstifte, wie sie bereits oben beschrieben werden, am Magnetgreifer angeordnet und umgeben die verformbaren Greifelemente.

Gemäß einer möglichen Ausgestaltung der vorliegenden Erfindung wird die Isolierung durch mindestens ein flexibles Element gebildet wird, welches die Greifelemente seitlich umgibt. Bei dieser Ausgestaltung ist daher (auch) die Isolierung verformbar.

Gemäß einer möglichen Ausgestaltung der vorliegenden Erfindung wird die Isolierung durch einen Faltenbalg gebildet, welcher die Greifelemente umgibt. Gemäß einer möglichen Ausgestaltung ist an das innere des Faltenbalgs ein Unterdruck anlegbar, welcher diesen in der Art eines Sauggreifers an der Kontur des zu greifenden Gegenstands fixiert.

Gemäß einer möglichen Ausgestaltung wird die Isolierung durch eine flexible Hülle gebildet, welche eine magnetische Isolierschicht bildet und die Greifelemente seitlich umgibt.

Bei einer Kombination des ersten und des zweiten Aspektes können die flexiblen Hüllen der Greifelemente, welche das Granulat enthalten, auf ihren Seitenflächen eine Isolierschicht bilden oder mit einer magnetischen Isolierschicht ausgestattet sein.

Alternativ kann auch eine flexible Hülle vorgesehen sein, welche die mehreren Greifelemente insgesamt als Gruppe umgibt.

Bei der Ausgestaltung mit einer verformbare Frontfläche der Greifelemente ist bevorzugt eine Isolierung vorgesehen, welche die Greifelemente voneinander trennt. Hierdurch wird verhindert, dass die Greifelemente sich durch ihre Verformbarkeit so aneinander anlegen, dass ein magnetischer Kurzschluss entsteht.

Die Isolierung, welche die Greifelemente voneinander trennt, ist bevorzugt verformbar und/oder beweglich am Magnetgreifer angeordnet und beeinträchtigt die Verformung der Greifelemente daher nicht.

Sind die flexiblen Hüllen der Greifelemente mit einer Isolierung ausgestattet, bildet diese gleichzeitig auch eine Isolierung der Greifelemente untereinander.

Ist dagegen eine Isolierung vorgesehen, welche die mehreren Greifelemente insgesamt als Gruppe umgibt, so ist bevorzugt zusätzlich eine Isolierung vorgesehen, welche die Greifelemente voneinander trennt, uns beispielsweise als flexible Trennwand, beispielsweise eines flexiblen Faltenbalgs, oder als bewegliche Isolierstifte, insbesondere solche, wie sie zum ersten Aspekt beschrieben wurden, ausgeführt sein kann.

Wie oben beschrieben können die Greifelemente auch durch Greifstifte gebildet werden, welche linear beweglich am Magnetgreifer angeordnet sind.

Gemäß einer möglichen Ausgestaltung der vorliegenden Erfindung umfassen die Greifstifte hierbei jeweils ein Führungselement, mit welchem sie linear beweglich am Magnetgreifer geführt sind.

Gemäß einer möglichen Ausgestaltung der vorliegenden Erfindung sind hierbei die Führungselemente mindestens zweier benachbarter Greifstifte unmittelbar aneinander geführt. Hierdurch wird eine kompaktere Anordnung, höhere Flussquerschnitte und eine einfachere Herstellbarkeit erreicht.

Gemäß einer möglichen Ausgestaltung sind mindestens einem Polstück mehrere nebeneinander angeordnete Greifstifte zugeordnet, deren Führungselemente an einer Seitenwand des Polstückes geführt sind. Hierdurch wird ebenfalls eine kompaktere Anordnung, höhere Flussquerschnitte und eine einfachere Herstellbarkeit erreicht.

Insbesondere werden die mindestens zwei Greifelemente durch Greifstifte gebildet, welche linear beweglich am Magnetgreifer angeordnet sind, wobei die Greifstifte jeweils ein Führungselement umfassen, mit welchem sie linear beweglich am Magnetgreifer geführt sind. In einer ersten Variante ist vorgesehen, dass die Führungselemente mindestens zweier benachbarter Greifstifte unmittelbar aneinander geführt sind. In einer zweiten Variante ist vorgesehen, dass mindestens einem Polstück mehrere nebeneinander angeordnete Greifstifte zugeordnet sind, deren Führungselemente an einer Seitenwand des Polstückes geführt sind. Durch beide Varianten wird eine kompaktere Anordnung, höhere Flussquerschnitte und eine einfachere Herstellbarkeit erreicht.

Insbesondere bilden die Führungselemente der Greifstifte hierbei einen Block von Elementen, welcher in einer nicht weiter unterteilten Aussparung des Magnetgreifers angeordnet ist. Bevorzugt wird hierbei magnetischer Fluss unmittelbar zwischen den Führungselementen übertragen.

Bevorzugt kommen die Merkmale der ersten und zweiten Variante in Kombination zum Einsatz.

Bevorzugte Ausgestaltungen, welche soweit nicht anders angegeben sowohl mit der ersten, als auch mit der zweiten, als auch mit einer Kombination der beiden Varianten zum Einsatz kommen können, werden im folgenden beschrieben.

Gemäß einer möglichen Ausgestaltung der vorliegenden Erfindung sind mindestens einem Polstück eine erste Gruppe von nebeneinander angeordneten Greifstiften zugeordnet ist, deren Führungselemente an einer Seitenwand des Polstückes geführt sind, wobei dem Polstück weiterhin eine zweite Gruppe von nebeneinander angeordneten Greifstiften zugeordnet sind, deren Führungselemente an den Führungselementen der ersten Gruppe geführt sind. Der magnetische Fluss wird daher von dem Polstück über die erste Gruppe zur zweiten Gruppe von Greifstiften geführt.

Gemäß einer möglichen Ausgestaltung der vorliegenden Erfindung sind die Greifelemente durch Greifstifte gebildet, welche jeweils ein Führungselement umfassen, mit welchem sie linear beweglich am Magnetgreifer geführt sind.

Gemäß einer möglichen Ausgestaltung der vorliegenden Erfindung umfasst der Magnetgreifer mindestens einen Isolierstift, welcher ein Führungselement aufweist, mit welchen er linear beweglich am Magnetgreifer geführt ist.

Gemäß einer möglichen Ausgestaltung der vorliegenden Erfindung ist der Isolierstift über das Führungselement an einem der Polstücke und/oder an Führungselementen von anderen Isolierstiften und/oder an Führungselementen von Greifstiften geführt ist.

Gemäß einer möglichen Ausgestaltung der vorliegenden Erfindung bestehen die Führungselemente der Greifstifte und/oder der Isolierstifte aus einem weichmagnetischen Material.

Die Führungselemente der Isolierstifte können jedoch auch aus einem nicht weichmagnetischen Material und/oder einem magnetischen Isoliermaterial gefertigt sein.

Gemäß einer möglichen Ausgestaltung der vorliegenden Erfindung sind an den Führungselementen der Greifstifte und/oder Isolierstifte Stiftelemente angeordnet, deren Frontfläche bei den Greifstiften eine Greiffläche des Magnetgreifers bildet.

Gemäß einer möglichen Ausgestaltung der vorliegenden Erfindung weisen die Stiftelemente einen kleineren Querschnitt auf als die Führungselemente, wobei die Stiftelemente bevorzugt durch Öffnungen in einem Gehäuse des Magnetgreifers hindurchgehen, an welchen die Führungselemente zurückgehalten werden.

Gemäß einer möglichen Ausgestaltung der vorliegenden Erfindung weisen die Führungselemente plane Seitenflächen auf, mit welchen sie aneinander und/oder an den Seitenflächen der Polstücke geführt sind. Hierdurch ergeben sich deutlich größere Auflageflächen als bei einer runden Ausgestaltung.

Gemäß einer möglichen Ausgestaltung der vorliegenden Erfindung weisen die Führungselemente einen rechteckigen oder sechseckigen Querschnitt auf.

Gemäß einer möglichen Ausgestaltung der vorliegenden Erfindung weist der Magnetgreifer mehrere Greifstifte auf, deren Führungselemente in einem zwischen den beiden Polstücken vorgesehenem Raumbereich angeordnet sind. Auch hierdurch ergibt sich eine kompakte Anordnung und insbesondere kleine Abstände zwischen den Greifstiften.

Gemäß einer möglichen Ausgestaltung der vorliegenden Erfindung ist jedem der beiden Polstücken mindestens eine Gruppe von diesen Greifstiften zugeordnet, wobei bevorzugt die beiden Gruppen durch eine aus einem magnetischen Isoliermaterial gefertigte Trennwand, welche den Raumbereich in mindestens zwei Teilräume teilt, voneinander getrennt sind.

Gemäß einer möglichen Ausgestaltung der vorliegenden Erfindung sind die Greifstifte Innerhalb der mindestens zwei Teilräume nur aneinander und den Seitenwänden der Teilräume geführt.

Gemäß einer möglichen Ausgestaltung der vorliegenden Erfindung umfasst der Magnetgreifer eine die Magnetflussquelle und/oder Polschuhe und/oder den Lagerungsbereich für die Greifstifte des Magnetgreifers seitlich umgebende, magnetisch isolierende Einfassung. Insbesondere ist diese starr am Magnetgreifer angeordnet und verhindert, dass Bauteile in diesem Bereich am Magnetgreifer anhaften.

Gemäß einer möglichen Ausgestaltung der vorliegenden Erfindung ist der Magnetgreifer so ausgestaltet, dass die mindestens zwei Greifelemente bei eingeschalteter und/oder teilweise eingeschalteter Magnetflussquelle unbeweglich und/oder nicht verformbar an dem Magnetgreifer angeordnet sind, so dass ein Einschalten und/oder teilweises Einschalten die durch die Frontflächen der Greifelemente gebildete Greifkontur fixiert.

Je nach Ausgestaltungsvariante kann der Magnetgreifer so ausgestaltet sein, dass die Isolierung bei eingeschalteter und/oder teilweise eingeschalteter Magnetflussquelle ebenfalls unbeweglich und/oder nicht verformbar an dem Magnetgreifer angeordnet ist, oder dass die Isolierung auch bei eingeschalteter oder teilweise eingeschalteter Magnetflussquelle beweglich und/oder verformbar ist.

Gemäß einer möglichen Ausgestaltung der vorliegenden Erfindung weist die Magnetflussquelle mindestens drei Schaltzustände aufweist, in welchen der magnetische Fluss eingeschaltet, ausgeschaltet und teilweise eingeschaltet ist. Alternativ oder zusätzlich kann die Magnetflussquelle auch so ausgeführt sein, dass der magnetische Fluss stufenlos ansteuerbar bzw. schaltbar ist.

Durch ein Einschalten der Magnetflussquelle wird hierbei die zum Greifen notwendige Greifkraft erzeugt. Ist die Magnetflussquelle nur teilweise eingeschaltet, werden hierdurch bevorzugt die Greifelemente in ihrer Position und/oder Form fixiert, ohne dass die Greifkraft ausreichen würde, um einen Gegenstand zu greifen.

Die schaltbare Magnetflussquelle kann mindestens einen Elektromagneten umfassen und durch Anlegen einer elektrischen Spannung an den Elektromagneten schaltbar sein. Alternativ oder zusätzlich kann die schaltbare Magnetflussquelle mindestens einen Permanentmagneten umfassen und durch eine mechanische Verstellung eines Bauteils schaltbar sein.

Gemäß einer möglichen Ausgestaltung der vorliegenden Erfindung umfasst der Magnetgreifer eine Steuerung, welche die schaltbare Magnetflussquelle ansteuert, und insbesondere eingerichtet ist, diese in die oben genannten Schaltzustände zu schalten.

Werden Greifstifte als Greifelemente eingesetzt, ist der Magnetgreifer bevorzugt mit mindestens 6, bevorzugt mit mindestens 10, weiter bevorzugt mit mindestens 20 Greifstiften ausgestattet.

Werden verformbare Greifelemente eingesetzt, können je nach zu greifendem Gegenstand auch nur 2, nur 4 oder nur 6 Greifelemente eingesetzt werden. Auch hier kann die Anzahl der Greifstifte jedoch auch höher sein.

Die vorliegende Erfindung umfasst weiterhin eine Vorrichtung zum automatisierten Entnehmen von in einem Behälter ungeordnet angeordneten Werkstücken, mit einer Objekterkennungseinrichtung zum Erfassen der Werkstücke im Behälter und einem Magnetgreifer gemäß der vorliegenden Erfindung, wie er oben beschrieben wurde, zum Greifen und Entnehmen der Werkstücke aus dem Behälter.

Gemäß einer möglichen Ausgestaltung der vorliegenden Erfindung umfasst die Vorrichtung weiterhin eine Handhabungsvorrichtung, insbesondere einen Roboter und/oder ein Linien-, Flächen- und/oder Raumportal, an welchem der Magnetgreifer angeordnet ist.

Gemäß einer möglichen Ausgestaltung der vorliegenden Erfindung umfasst die Vorrichtung eine Steuerung zur Auswertung der Daten der Objekterkennungseinrichtung, zur Pfadplanung und zur Ansteuerung der Handhabungsvorrichtung und/oder des Magnetgreifers.

Insbesondere kann die Steuerung so ausgeführt und/oder programmiert sein, dass die Vorrichtung eines der bisher oder im folgenden beschriebenen Verfahren durchführt, insbesondere automatisiert durchführt.

Die vorliegende Erfindung umfasst weiterhin ein Verfahren zum Betrieb eines Magnetgreifers, wie er oben beschrieben wurde, mit den Schritten:
- Heranfahren des Magnetgreifers an einen zu greifenden Gegenstand mit ausgeschalteter Magnetflussquelle, so dass die Greifelemente durch den Kontakt mit dem Bauteil bewegt und/oder verformt werden und eine an das Bauteil angepasste Greifkontur bilden, und
- zumindest teilweises Einschalten der Magnetflussquelle zum Fixieren der Greifkontur und/oder zum Greifen des Bauteils.

Das erfindungsgemäße Verfahren kann bevorzugt so ausgestaltet sein, wie dies bereits oben im Hinblick auf den erfindungsgemäßem Magnetgreifer sowie die erfindungsgemäße Vorrichtung beschrieben wurde.

Gemäß einer möglichen Ausgestaltung kann hierbei zunächst ein (ggf. extern zum Behälter durchgeführtes) Auffahren auf eine vordefinierte Kontur bzw. einen Gegenstand erfolgen, um den Magnetgreifer mit einer vorgeformten Greifkontur zu versehen, welche es erlaubt, den Gegenstand sicher zu greifen.

Die Magnetkraft wird nun teilweise eingeschaltet, um diese Greifkontur zu fixieren, und bleibt für die nun folgenden Greifvorgänge immer zumindest teilweise eingeschaltet, um die Greifkontur beizubehalten.

Zum Greifen wird der Greifer sodann lagerichtig an den zu greifenden Gegenstand herangefahren, so dass die Greifkontur auf dem Gegenstand aufliegt, und der Gegenstand durch volles Einschalten der Magnetflussquelle gegriffen und teilweises Ausschalten abgelegt.

Die Greifkontur kann auch von erstem Griff eines Gegenstands im Behälter (Lerngriff) für die folgenden Greifoperationen gespeichert werden (ebenfalls mit reduzierter Magnetkraft).

Gemäß einem alternativen Vorgehen kann die Magnetflussquelle jedoch auch nach einer oder mehreren Greifoperationen komplett ausgeschaltet werden, so dass die Greifelemente wieder beweglich und/oder verformbar sind und sich an die Kontur eines zu greifenden Gegenstands anpassen.

Insbesondere kann die Magnetflussquelle komplett ausgeschaltet werden, wenn keiner der im Behälter befindlichen Gegenstände mit der bestehenden Greifkontur lagerichtig gegriffen werden kann. In diesem Fall kann daher für das Greifen des nächsten Gegenstand eine andere Greifposition und damit eine andere Greifkontur eingesetzt werden. Auch das Einstellen der neuen Greifkontur kann extern zum Behälter oder beim nächsten Griff in den Behälter erfolgen.

Die vorliegende Erfindung wird nun anhand von Ausführungsbeispielen sowie Zeichnungen näher beschrieben.

Dabei zeigen
- Fig. 1: ein erstes Ausführungsbeispiel des Magnetgreifers in einer perspektiven Ansicht,
- Fig. 2: das erste Ausführungsbeispiel in einer Schnittansicht,
- Fig. 3: das erste Ausführungsbeispiel in einer Vorderansicht auf die Greiffläche,
- Fig. 4a: eine mögliche Ausgestaltung eines Isolierstifts und/oder Greifstifts,
- Fig. 4b: vier mögliche Ausgestaltungen der Frontfläche eines Greifstiftes,
- Fig. 4c: die vierte Ausgestaltung einer Frontfläche aus Fig. 4b in einer perspektivischen Ansicht,
- Fig. 5a bis 5c: drei Varianten des ersten Ausführungsbeispiels eines Magnetgreifers mit jeweils anders gestalteten Isolierstiften,
- Fig. 6: ein zweites Ausführungsbeispiel des Magnetgreifers in einer teilweisen Schnittansicht,
- Fig. 7: ein drittes Ausführungsbeispiel des Magnetgreifers in einer Schnittansicht,
- Fig. 8: ein viertes Ausführungsbeispiel des Magnetgreifers in einer Schnittansicht,
- Fig. 9: ein fünftes Ausführungsbeispiel des Magnetgreifers in einer Schnittansicht, und
- Fig. 10: ein Ausführungsbeispiel einer erfindungsgemäßen Vorrichtung zum automatisierten Entnehmen von in einem Behälter ungeordnet angeordneten Werkstücken.

Im folgenden werden Ausführungsbeispiele der vorliegenden Erfindung beschrieben.

Alle Ausführungsbeispiele des Magnetgreifers weisen jeweils eine schaltbaren Magnetflussquelle 11, welche nur schematisch dargestellt ist, sowie zwei mit der Magnetflussquelle in magnetischer Verbindung stehende Polstücke 12 auf.

Die Polstücke sind hierbei in dem ersten und zweiten Ausführungsbeispiel jeweils starr am Magnetgreifer angeordnet. Bei den darauf folgenden Ausführungsbeispielen können sie auch beweglich am Magnetgreifer angeordnet sein.

Weiterhin weisend die Magnetgreifer in allen Ausführungsbeispielen mindestens zwei Greifelemente 20, 120 auf, welche bei ausgeschalteter Magnetflussquelle beweglich und/oder verformbar an dem Magnetgreifer angeordnet sind, so dass sie mit ihren Frontflächen eine Greifkontur bilden, welche an die Kontur eines zu greifenden Gegenstands anpassbar ist.

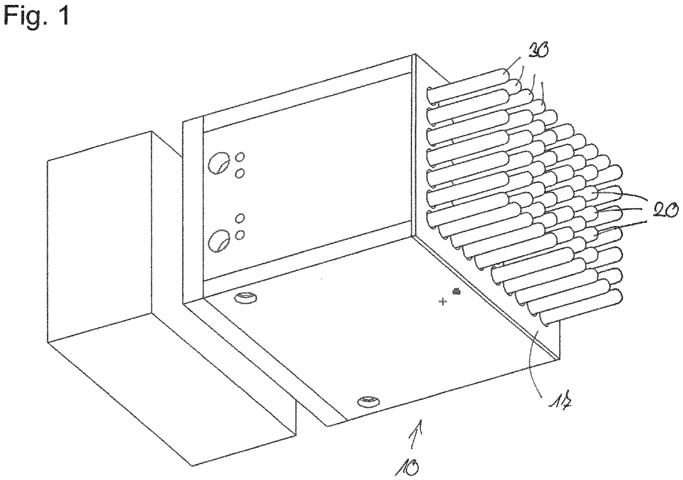

In Fig. 1 bis 3 ist ein erstes Ausführungsbeispiel eines solchen Magnetgreifers 10 gezeigt.

Gemäß einer ersten Ausführungsform der vorliegenden Erfindung umfasst der Magnetgreifer mehrere beweglich am Magnetgreifer gelagerte Isolierstifte 30, welche die Greifelemente 20 umgeben und hierdurch zur Seite hin magnetisch isolieren bzw. von weiteren Gegenständen, welche im Bereich des zu greifenden Gegenstandes liegen könnten, trennen. Die Isolierstifte 30 verhindern daher ein Anhaften von Gegenständen an den Seitenflächen der Greifelemente. Gemäß einer möglichen Ausgestaltung können die Seitenflächen der Greifelemente daher weichmagnetisch bzw. magnetisch leitend ausgeführt sein.

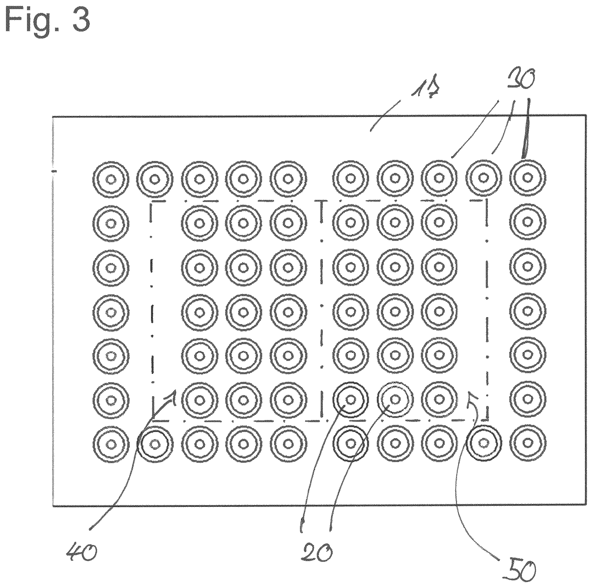

Wie aus Fig. 3 bilden die Isolierstifte 30 hierbei einen Rahmen, welcher die Greifelemente auf allen Seiten umgibt.

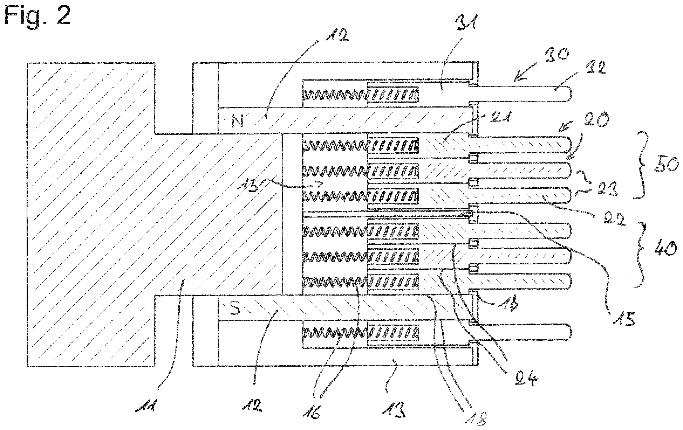

Die Isolierstifte 30 sind wie aus Fig. 2 ersichtlich linear beweglich an dem Magnetgreifer geführt und über eine Feder 16 in eine ausgerückte Stellung vorgespannt.

Im Ausführungsbeispiel weisen die Isolierstifte hierbei einen Führungsbereich 31 auf, welcher in einer Aussparung des Magnetgreifers geführt ist, sowie einen Stiftbereich 32, welcher in der ausgefahrenen Stellung aus dem Magnetgreifer herausragt.

Der Stiftbereich 32 weist im Ausführungsbeispiel einen kleineren Querschnitt auf als der Führungsbereich 31 und geht durch eine Aussparung in einer vorderen Abdeckplatte 17 des Magnetgreifers hindurch, welche kleiner ist als der Führungsbereich 31 und diesen daher im Gehäuse des Magnetgreifers zurückhält.

Die Greifelemente sind in dem in Fig. 1 bis 3 gezeigten Ausführungsbeispiel durch Greifstifte 20 gebildet, welche linear verschieblich am Magnetgreifer gelagert sind. Die Greifstifte sind durch Federn 16 in eine ausgerückte Stellung vorgespannt. Die Greifstifte können jedoch auch ohne Vorspannung lose im Magnetgreifer geführt sein.

Das Greifen des Bauteils erfolgt hierbei dadurch, dass die Greifstifte 20 mit ihrer Frontseite auf dem zu greifenden Bauteil aufsetzen und hierdurch einen geschlossenen Magnetkreis bilden. Durch die Beweglichkeit der Greifstifte können sie sich hierbei der Kontur des Bauteils anpassen.

Im Ausführungsbeispiel weisen die Greifstifte hierbei einen Führungsbereich 21 auf, welcher in einer Aussparung des Magnetgreifers geführt ist, sowie einen Stiftbereich 22, welcher in der ausgefahrenen Stellung aus dem Magnetgreifer herausragt.

Der Stiftbereich 22 weist im Ausführungsbeispiel einen kleineren Querschnitt auf als der Führungsbereich 21 und geht durch eine Aussparung in einer vorderen Abdeckplatte 17 des Magnetgreifers hindurch, welche kleiner ist als der Führungsbereich 21 und diesen daher im Gehäuse des Magnetgreifers zurückhält.

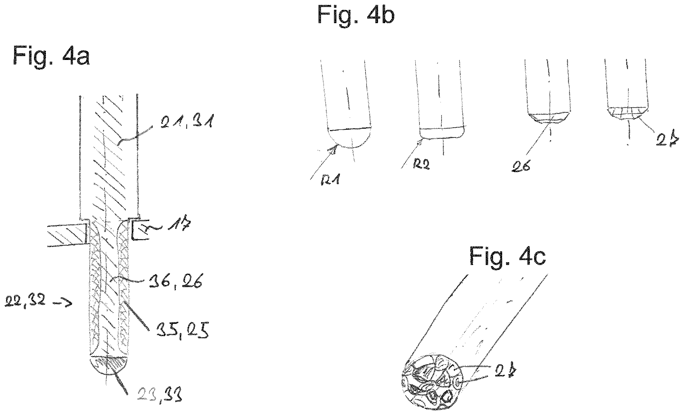

Eine mögliche Ausgestaltung eines Isolierstiftes und/oder Greifstiftes ist hierbei in Fig. 4a gezeigt. Der Isolierstift und/oder Greifstift weist hierbei im Stiftbereich 22, 32 eine Isolierhülle 25, 25 aus einem magnetisch isolierenden Material auf, welche einen Kern 26, 36 aus magnetisch leitfähigem bzw. weichmagnetischem Material umgibt. Der Führungsbereich 21, 31 besteht dagegen komplett oder zumindest an einer Außenseite aus magnetisch leitfähigem bzw. weichmagnetischem Material. Ebenso besteht die Spitze bzw. Frontfläche 23, 33 aus magnetisch leitfähigem bzw. weichmagnetischem Material.

Wird der in Fig. 4a gezeigte Stift als Isolierstift eingesetzt, dient er gleichzeitig auch als Greifstift, da er einen geschlossenen magnetischen Weg von dem Führungsbereich 31 über den Kern 36 bis zur Frontfläche 33 bereitstellt, über welchen eine Greifkraft auf einen zu greifenden Gegenstand aufgebracht werden kann. Gleichzeitig isoliert die Isolierhülle 35 nicht nur den Kern 36 zur Seite hin, sondern der Isolierstift kann auch weiter innen angeordnete Greifstifte isolieren, welche daher keine Isolierhülle benötigen, sondern komplett aus einem magnetisch leitfähigem bzw. weichmagnetischem Material gefertigt sein können.

Der in Fig. 4a gezeigte Stift kann jedoch auch als Greifstift eingesetzt werden, ohne dass dezidierte Isolierstifte zum Einsatz kommen, da er selbst bereits mit einer Isolierung ausgestattet ist. Insbesondere können hierbei alle Greifstifte eine Isolierhülle 25 aufweisen.

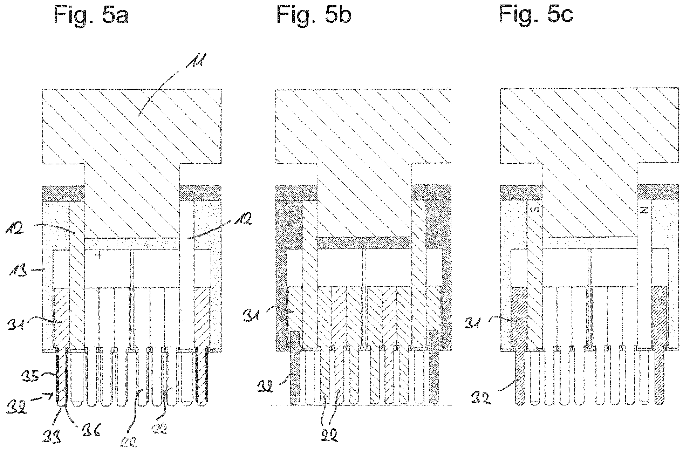

In Fig. 5a bis 5c sind nun drei Varianten der in Fig. 1 bis 3 gezeigten Ausgestaltung gezeigt, in welchen unterschiedliche Isolierstifte zum Einsatz kommen.

In Fig. 5a werden als Isolierstifte 30 die in Fig. 4a gezeigten und oben beschriebenen Isolierstifte mit einer Isolierhülle 35 eingesetzt. Die Isolierstifte 30 dienen daher zusätzlich auch als Greifstifte.

In Fig. 5b ist der Führungsbereich 31 der Isolierstifte 30 aus einem magnetisch leitfähigem bzw. weichmagnetischem Material gefertigt, der Stiftbereich 32 dagegen komplett aus einem magnetisch isolierenden Material.

In Fig. 5c sind sowohl der Führungsbereich 31 der Isolierstifte 30 als auch der Stiftbereich 32 und damit der gesamte Isolierstift aus einem magnetisch isolierenden Material gefertigt.

Die von den Isolierstiften 30 umgebenen Greifstifte 20 können bei allen drei Ausführungen ohne eine Isolierhülle ausgeführt werden, d.h. sowohl der Stiftbereich 22 als auch der Führungsbereich 21 kann aus einem magnetisch leitfähigem bzw. weichmagnetischem Material gefertigt sein. Sie können aber natürlich auch eine Isolierhülle 25 aufweisen.

In den gezeigten Ausführungsbeispielen sind die Führungsbereiche 31 jedenfalls einiger Isolierstifte 30 an einer äußeren Seitenfläche 18 der Polstücke 12 geführt und/oder stehen mit diesen in magnetischer Verbindung. Die Führungsbereiche 31 der Isolierstifte 30 könnten alternativ zu der gezeigten Anordnung, in welcher sie unmittelbar an die Polstücke angrenzen, auch an den Führungsbereichen 21 einer Reihe von Greifelementen, welche zwischen den Führungsbereichen 31 der Isolierstifte 30 und der Außenfläche der Polstücke 12 angeordnet sein könnten, geführt sein. Auch in diesem Fall wäre eine magnetisch leitende Verbindung über die Führungsbereichen 21 der Greifelemente gegeben.

Bei einem Einschalten der Magnetflussquelle werden die Führungsbereiche 31 der Isolierstifte 30 daher in jenen Varianten in Fig. 5a und 5b, in welchen sie aus einem weichmagnetischen Material bestehen, magnetisch fixiert. Dies gilt insbesondere für die Ausgestaltung in Fig. 5a, da in diesem Fall der Magnetkreis von dem Polstück 12 über den Führungsbereich 31 und den Kern 36 zum zu greifenden Bauteil führt und daher eine Haltekraft auch auf den Führungsbereich 31 ausgeübt wird. In der Variante in Fig. 5b nimmt der Führungsbereich 31 dagegen nur zusätzlich zu dem Polstück 12 am magnetischen Querschnitt des Magnetkreises teil, so dass die Haltekraft, welche auf den Führungsbereich 31 ausgeübt wird, entsprechend niedriger ist.

Unabhängig von der Ausgestaltung der Führungsbereiche 31 sind im Ausführungsbeispiel die Führungsbereiche jedenfalls einiger benachbarter Isolierstifte unmittelbar aneinander geführt. Mehrere Isolierstifte bilden daher eine geschlossene Reihe, deren Führungsbereiche 31 in einem Block in einer gemeinsamen Aussparung des Magnetgreifers geführt sind.

Gemäß einer bevorzugten Ausgestaltung der vorliegenden Erfindung sind die Führungsbereiche 21 jedenfalls einiger benachbarter Greifelemente 20 aneinander geführt. Mehrere Greifstifte bilden daher eine geschlossene Reihe, deren Führungsbereiche 21 in einem Block in einer gemeinsamen Aussparung des Magnetgreifers geführt sind. Hierdurch wird der magnetische Fluss von einem der Führungsbereiche 21 zum nächsten übertragen, d.h. die Führungsbereiche 21 nehmen auch an dem Magnetkreislauf benachbarter Greifelemente teil.

Ebenfalls gemäß einer bevorzugten Ausgestaltung der vorliegenden Erfindung sind die Führungsbereiche 21 jedenfalls einiger Greifelemente 20 an einer Seitenfläche 18 und insbesondere einer inneren Seitenfläche 18 eines Polstücks 12 geführt. Mit mindestens einer Seitenfläche sind sie dagegen nicht an einem Polstück 12 geführt.

Die Seitenflächen der Führungsbereiche 21 sind jeweils eben ausgeführt und stehen daher flächig mit den Seitenflächen 18 des Polstücks bzw. der anderen Führungsbereiche 21 in Kontakt. Insbesondere weisen die Führungsbereiche 21 einen rechteckigen, bspw. quadratischen Querschnitt auf. Dies gilt auch für die Führungsbereiche 31 der Isolierstifte.

Hierdurch wird zum einen die Herstellung erheblich vereinfacht. Weiterhin wird der Materialquerschnitt, welcher zur Leitung des magnetischen Flusses zur Verfügung steht, erheblich erhöht.

Wie in Fig. 2 sowie 5a bis 5c ersichtlich sind im Ausführungsbeispiel mehrere Reihen von Greifelementen 20 vorgesehen, welche einem Polstück zugeordnet sind, wobei eine erste Reihe unmittelbar an einer Seitenwand des Polstücks geführt ist. Die darauffolgende Reihe oder Reihen sind dagegen an einer zwischen ihnen und dem Polstück angeordneten Reihe von Greifelementen 20 geführt und auch der magnetische Fluss wird von dem Polstück durch die dazwischenliegende Reihe von Greifelementen zu diesen geführt. Die mehreren Reihen bilden daher insgesamt einen Block, welcher in einer gemeinsamen Aussparung angeordnet ist. Es ergibt sich hierdurch eine sehr kompakte Ausgestaltung.

An der Außenseite der Polstücke könnte ebenfalls eine oder mehrere Reihen von Greifelementen geführt sein.

Wie aus Fig. 2 und 3 ersichtlich umfasst der Greifer zwei Gruppen 40 und 50 von Greifstiften, welche jeweils einem der beiden Polstücke zugeordnet sind und in dem Bereich zwischen den beiden Polstücken 12 angeordnet sind. Die Führungselemente 21 dieser beiden Gruppen werden hierbei durch eine Isolierwand 15 magnetisch voneinander getrennt, welche diesen Bereich in zwei Teile aufteilt.

Die beiden Gruppen von Greifstiften werden auf allen Seiten von dem Rahmen von Isolierstiften 30 umgeben, wie aus Fig. 3 ersichtlich ist.

In Fig. 4a ist auch noch einmal erkennbar, wie der Führungsbereich 21, 31 an der Frontplatte 17 zurückgehalten wird. Es sind jedoch selbstverständlich auch andere mechanische Ausgestaltungen möglich, welche die Isolierstifte und/oder Greifstifte am Magnetgreifer sichern, insbesondere auch solche, welche es erlauben, dass der Stiftbereich den gleichen Querschnitt aufweist wie der Führungsbereich. Beispielsweise kann der Führungsbereich hierbei ein Langloch aufweisen, durch welches eine Sicherungsstange hindurchgeht.

In Fig. 4b sind unterschiedliche Ausgestaltungen der Frontfläche 23, 33 eines Greifstiftes und/oder Isolierstiftes gezeigt. In der Figur ganz links weist die Frontfläche eine einheitlich gekrümmte Oberfläche auf, insbesondere in Form einer Teilkugel mit einem definierten Radius R1. In der zweiten Figur von links weist die Frontfläche einen ebenen Mittenabschnitt auf, welcher über einen gekrümmten Abschnitt, hier mit einem Radius R2 eingezeichnet, in die Seitenfläche übergeht. Bei der Ausgestaltung in der dritten Figur von links wird der Übergang dagegen durch einen Teilkonus 26 gebildet. Weiterhin kann auch der Mittelteil der Frontfläche durch einen Konus gebildet sein. Ganz rechts und in Fig. 4c ist eine Ausgestaltung gezeigt, bei welcher die Frontfläche von einer Mehrzahl gegeneinander geneigter Facetten gebildet wird. Gemäß einer möglichen Ausgestaltung der vorliegenden Erfindung sind die Spitzen der Greifstifte austauschbar, um die Frontflächen der Greifstifte individuell an den zu greifenden Gegenstand anpassen zu können.

Wie in Fig. 2 ersichtlich weist der Magnetgreifer im Ausführungsbeispiel Gehäuseelemente 13 aus einem magnetisch isolierenden Material auf, welche die Magnetquelle 11, die Polstücke 12 und/oder die Führungselemente 21 und 31 nach außen hin magnetisch isolieren, so dass auch in diesem Bereich keine Gegenstände anhaften.

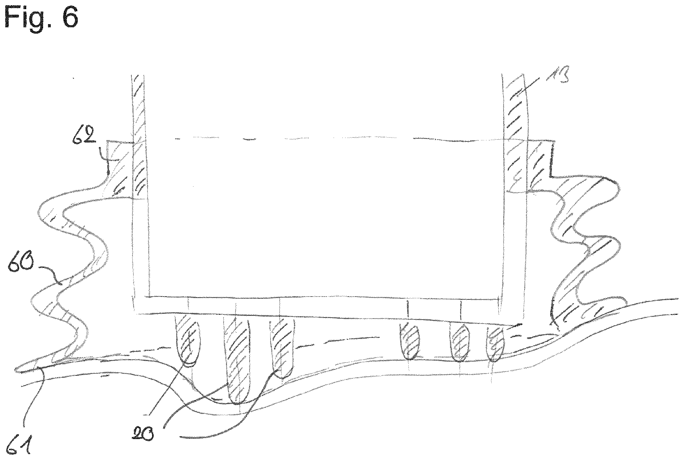

Fig. 6 zeigt ein zweites Ausführungsbeispiel, bei welchem die Isolierung anders ausgestaltet ist als bei dem ersten Ausführungsbeispiel.

Hier wird als Isolierung, welche die Greifelemente insgesamt rahmenförmig umgibt, eine flexible bzw. verformbare Umfassung 60 aus einem magnetisch isolierenden Material eingesetzt. Im Ausführungsbeispiel ist hierbei ein Faltenbalg vorgesehen, welcher in einem Verbindungsbereich 62 an einem Gehäuse des Magnetgreifers befestigt ist und von dort aus nach vorne zu dem zu greifenden Gegenstand reicht, welchen der mit seiner Vorderkante 61 berührt.

In einer möglichen Ausgestaltung könnte die Isolierung bei allen oben gezeigten Ausgestaltungen auch aus einem magnetisch leitfähigen Material bestehen, solange sie nicht magnetisch leitend mit den Polstücken und/oder dem weichmagnetischen Material der Greifelemente in Verbindung steht, da sie die Greifelemente auch so nach außen magnetisch isoliert und verhindert, dass anderen Gegenstände seitlich an den Greifelementen anhaften. In diesem Fall muss jedoch durch die mechanische Ausgestaltung der Isolierung sichergestellt sein, dass diese selbst nicht mit der Seitenfläche der Greifelemente in Kontakt kommen kann. Weiterhin muss vermieden werden, dass die Isolierung sich im Betrieb aufmagnetisiert. Bevorzugt ist die Isolierung daher aus einem magnetisch isolierenden Material gefertigt.

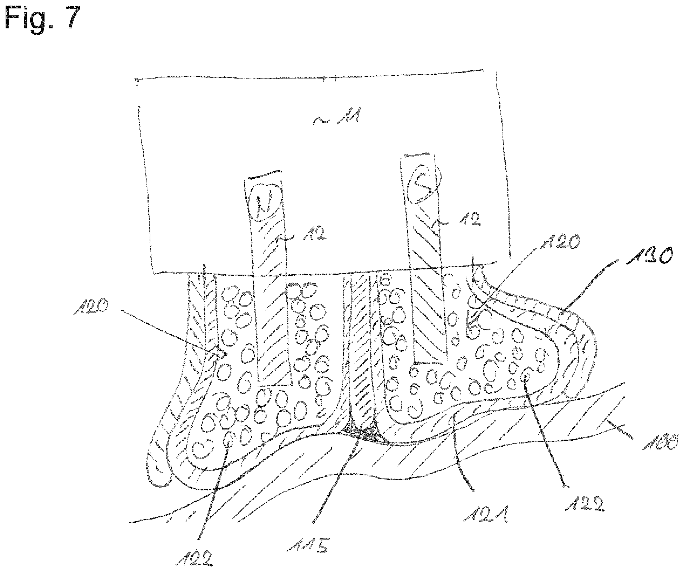

In Fig. 7 bis 9 sind weitere Ausführungsbeispiele gezeigt, bei welchen als Greifelemente daher keine in sich starren, aber beweglich gelagerten Greifstifte 20 eingesetzt werden, sondern verformbare Greifelemente 120.

Insbesondere weisen die Greifelemente 120 hierbei eine flexible, verformbare Frontfläche 123 auf, welche sich daher flächig an die Kontur des zu greifenden Gegenstands anpassen und anlegen kann.

In allen dargestellten Ausführungsbeispielen weisen die Greifelemente hierbei eine flexible Hülle 121 auf, welche mit einem weichmagnetischen Granulat 122 gefüllt ist. Liegt kein Magnetfeld an, können die Greifelemente daher verformt werden.

Die flexible Hülle 121 ist jedenfalls im Bereich der Frontfläche 123 bevorzugt ebenfalls aus einem weichmagnetischen Material, beispielsweise einem Gewirk aus weichmagnetischen Drähten wie einem Geflecht oder einem Kettenhemd.

Die Polstücke 12 sind im Ausführungsbeispiel als Polstifte ausgeführt, welche in den durch die flexible Hülle 121 umschlossenen Raum und damit in das Granulat hineinreichen.

Die Polstücke können hierbei in einer ersten Ausgestaltung starr am Magnetgreifer angeordnet sein.

Alternativ können sie linear beweglich am Magnetgreifer geführt und in eine ausgeschobene Stellung vorgespannt sein. Sie komprimieren hierdurch das Granulat und sorgen so für eine pralle Füllung der flexiblen Hülle 121. Weiterhin wird der Abstand zwischen den Polstücken und dem zu greifenden Gegenstand, welcher über das Granulat überbrückt werden muss, verringert.

Anders als bei den in Fig. 1 bis 5 eingesetzten Greifstiften ist das Ziel der beweglichen Anordnung der Polstücke hierbei nicht die direkte Berührung des zu greifenden Gegenstands und dementsprechend die Erzeugung einer an den Gegenstand angepassten Greifkontur. Diese Aufgabe wird vielmehr über das Granulat und die flexible Hülle übernommen. Die Beweglichkeit der Polstücke dient vielmehr dazu, zu komprimieren und den Abstand zum Gegenstand zu verringern, um die Magnetflussdichte zu erhöhen.

Bei dem in Fig. 7 gezeigten Ausführungsbeispiel werden die beiden Greifelemente voneinander durch ein Isolierelement 115 magnetisch voneinander isoliert, so dass ihre einander zugewandten Seitenflächen magnetisch voneinander getrennt sind. Das Isolierelement 115 ist als eine flexible Wand ausgeführt, welche bspw. wie in Fig. 7 gezeigt beidseitig an den einander zugewandten Seitenbereichen der Greifelemente befestigt ist.

Weiterhin werden die Greifelemente 120 durch eine Isolierung 130 eingefasst, welche deren Seitenbereiche nach außen hin magnetisch isoliert. Auch die Isolierung 130 kann als eine flexible Wand ausgeführt sein, welche bspw. wie in Fig. 7 gezeigt an den nach außen gewandten Seitenbereichen der Greifelemente befestigt ist.

Die Isolierung 130 und/oder 120 kann jedoch auch als von den Greifelementen beabstandete flexible Isolierung ausgeführt sein, beispielsweise als Faltenbalg mit einer Innenwand für das Element 120.

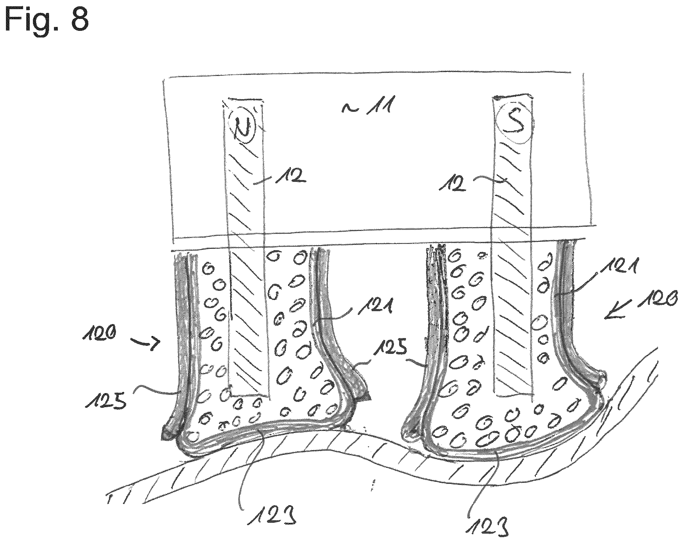

Bei dem in Fig. 8 gezeigten Ausführungsbeispiel sind dagegen die einzelnen Greifelemente jeweils von einer flexiblen Isolierung seitlich umhüllt, welche daher die Greifelemente sowohl voneinander als auch nach außen hin isoliert.

Die flexible Isolierung kann hierbei durch eine Seitenwand der flexiblen Hülle 121 der jeweiligen Greifelemente gebildet sein oder als zusätzliche Schicht außen an dieser angeordnet sein.

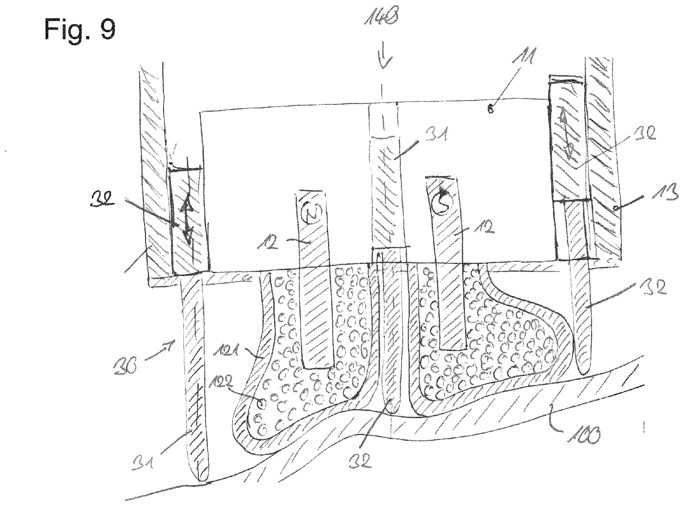

Bei dem in Fig. 9 gezeigten Ausführungsbeispiel sind dagegen als Isolierung beweglich gelagerte Magnetstifte 30 vorgesehen, welche die Greifelemente 120 in gleicher Weise umgeben, wie dies bei dem ersten Ausführungsbeispiel in Fig. 1 bis 5 der Fall ist.

Weiterhin wird eine zusätzliche mittlere Reihe 140 von beweglich gelagerten Isolierstiften 30 eingesetzt, welche zwischen den beiden Polstücken zugeordneten Greifelementen angeordnet ist und die Greifelemente voneinander trennt.

Gemäß den Ausführungsbeispielen in Fig. 7 bis 9 ist daher ein Magnetgreifer für ein ferromagnetisches Werkstück bereitgestellt, wobei die Greifelemente sich der Werkstückkontur oder einer Referenzkontur vollständig frei anpassen können. Der Magnetgreifer umfasst hierfür für jedes Greifelement einen Sammelbehälter für ferromagnetisches Füllmaterial (Granulat, z.B. Kugeln), eine schaltbare und bevorzugt in der Magnetfeldstärke frei einstellbare Magnetflussquelle (Feldstärke 0 bis max.) mit mindestens einem Polschuh außerhalb oder innerhalb des Sammelbehälters sowie als komplette Greifeinrichtung über mindestens 2 Greifelemente für die magnetischen Polpaare Nord und Süd.

Die Sammelbehälter (Kammern, Säcke) können aus nicht-ferromagnetischen oder aus ferromagnetischem Material ("z.B. Kettenhemd") bestehen.

Zur Abschirmung der Magnetkräfte verfügen die Sammelbehälter außerhalb der Kontaktflächen über eine Isolierung.

Die Isolierung stellt den zentralen Bestandteil der vorliegenden Erfindung dar, da durch diese Maßnahme die Magnetkräfte nur dort wirken, wo diese für das Greifen benötigt werden. Die Isolierung kann z.B. über zustellbare, klemmbare, federbelastete Stifte ausgeführt werden, welche zumindest außerhalb des Gehäuses aus nichtferromagnetischem Material bestehen oder mit einem nicht ferromagnetischen Überzug versehen sind. Die Zustellung der Stifte wäre linear.

Alternativ könnte der Schutzvorhang aus einem ringförmigen geschlossenen Element (z.B. Gummi-Faltenbalg) bestehen, welcher sich durch die Zustellbewegung ebenfalls der Oberflächenkontur vollständig anpasst.

Alternativ könnte durch Aufbringung einer formelastischen Schutzschicht auf den Sammelbehälter ein elastischer formstabiler Sammelbehälter erzeugt werden.

Bei vollständiger Füllung wird die Formstabilität erhöht. Die Funktion der vollständigen Füllung kann unter Ausnutzung der Elastizität dadurch erhöht werden, dass die Polschuhe nach Positionierung der Greifeinrichtung am Werkstück in diese zugestellt werden und diese wie ein Kolben den Druck im Sammelbehälter erhöhen und den Abstand zum zu greifenden Gegenstand zu verringern, ohne dass die Polschuhe den Gegenstand allerdings unmittelbar berühren würden und daher eine Greiffläche bereitstellen würden. Die Greiffläche wird vielmehr durch den Sammelbehälter und dessen Füllung bereitgestellt.

Sobald der Greifer mit den Sammelbehältern an das Werkstück oder eine entsprechende Referenzfläche zugestellt wird, passt sich die Form der Sammelbehälter der Oberfläche vollständig an. Das Granulat im Sammelbehälter ist ferromagnetisch. Durch Anlegen einer definierten Magnetfeldstärke kommt es zu einem Memory Effekt des Füllguts im Sammelbehälter mit minimaler Haltekraft an den Kontaktstellen zum Bauteil oder Referenzfläche. Verstärkt wird dieser Effekt, wenn sich das Granulat im Vergleich zu Kugeln verhaken kann. Somit lassen sich unter Verwendung einer minimalen Magnetkraft beliebige Greiferkonturen erzeugen und speichern.

Ziel der Konturanpassung ist es, neben der erhöhten Haltekraft (Anzahl der Kontaktflächen) normal zur Werkstückoberfäche eine erhöhte Querkraft aufgrund der Formkontur (Verzahnung) zu erzielen.

Anstelle der verformbaren Greifelemente gemäß dem zweiten Ausführungsbeispiel könnten auch verschieblich gelagerte Greifstifte zum Einsatz kommen. Das Ergebnis der Konturanpassung ist ähnlich, nur dass diese eben nicht kontinuierlich sondern in diskreten Abständen erfolgt. Die Stifte sind im Gehäuse frei beweglich und nur lose an ihren Seitenflächen geführt und bevorzugt durch Federn vorgespannt.

Die Greifstifte sind aus ferromagnetischem Material, welches im Stiftbereich ggf, auf seiner Außenseite isoliert ist.

Die Besonderheit ist, dass durch Anlegen des Magnetfeldes jeder dieser Stifte zu einem temporären Magnetpol für die weiteren Stifte wird. Die Stifte sind deshalb mit großen Flächen versehen, das Magnetfeld wird von Stift zu Stift übertragen. Es bildet sich ein Block, welcher sich automatisch am Polschuh anlegt. Auf eine Klemmeinrichtung kann verzichtet werden.

Als magnetisch isolierendes Material kann beispielsweise für starre Isolierungen Aluminium eingesetzt werden, für flexible Isolierungen Kunststoff und/oder Gummi.

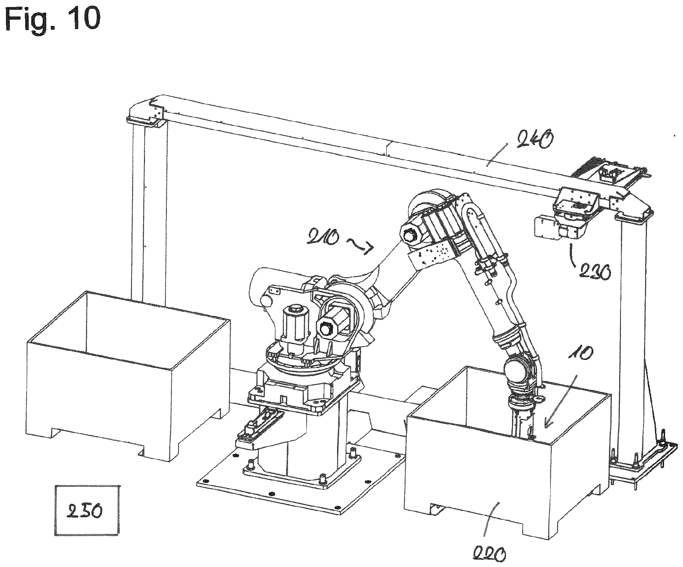

Fig. 10 zeigt ein Ausführungsbeispiel einer Vorrichtung zum automatisierten Entnehmen von in einem Behälter 220 ungeordnet angeordneten Werkstücken, mit einer Objekterkennungseinrichtung 230 zum Erfassen der Werkstücke im Behälter 220 und einem Magnetgreifer 10, wie er oben beschrieben wurde.

Der Magnetgreifer 10 ist hierbei an einer Handhabungsvorrichtung 210 angeordnet und wird durch diese bewegt. Im Ausführungsbeispiel handelt es sich um einen Industrieroboter mit mehreren rotatorischen Achsen, insbesondere mit mindestens 6 rotatorischen Achsen.

Weiterhin ist eine schematisch dargestellte Steuerung 250 zur Auswertung der Daten der Objekterkennungseinrichtung 230, zur Pfadplanung und zur Ansteuerung der Handhabungsvorrichtung 210 und/oder des Magnetgreifers 10 vorgesehen.

## Patentansprüche

1. Magnetgreifer mit
einer schaltbaren Magnetflussquelle (11),
zwei mit der Magnetflussquelle (11) in magnetischer Verbindung stehenden Polstücken (12) und
mindestens zwei Greifelementen (20, 120), welche jeweils mit einem der beiden Polstücke (12) in magnetisch leitender Verbindung stehen,
wobei die mindestens zwei Greifelemente (20, 120) bei ausgeschalteter Magnetflussquelle (11) beweglich und/oder verformbar an dem Magnetgreifer angeordnet sind, so dass sie mit ihren Frontflächen (23) eine Greifkontur bilden, welche an die Kontur eines zu greifenden Gegenstands anpassbar ist,
**dadurch gekennzeichnet,**
**dass** der Magnetgreifer eine Isolierung (30, 130) umfasst, welche die mindestens zwei Greifelemente (20, 120) umgibt und diese zur Seite hin magnetisch isoliert.

2. Magnetgreifer nach Anspruch 1, wobei die Isolierung (30, 130) jedenfalls bei ausgeschalteter Magnetflussquelle (11) beweglich und/oder verformbar an dem Magnetgreifer angeordnet ist.

3. Magnetgreifer nach Anspruch 1 oder 2, wobei die mindestens zwei Greifelemente durch Greifstifte (20) gebildet werden, welche beweglich am Magnetgreifer gelagert sind, wobei die Greifstifte (20) bevorzugt linear beweglich sind und/oder durch Federelemente (16) in eine ausgefahrene Position vorgespannt sind.

4. Magnetgreifer nach einem der vorangegangenen Ansprüche, wobei die Isolierung durch mindestens ein flexibles Element (130) gebildet wird, welches die Greifelemente (120) seitlich umgibt, insbesondere einen Faltenbalg und/oder eine flexible Hülle.

5. Magnetgreifer nach einem der Ansprüche 1 bis 3, wobei die Isolierung durch Isolierstifte (30) gebildet wird, welche beweglich am Magnetgreifer gelagert sind und die Greifelemente (20) umgeben wobei die Isolierstifte (30) bevorzugt linear beweglich sind und/oder durch Federelemente (16) in eine ausgefahrene Position vorgespannt sind.

6. Magnetgreifer nach Anspruch 3 oder 5, wobei die Isolierung (30, 130) und/oder die Isolierstifte (30) dadurch gebildet wird oder werden, dass die Greifstifte (20) und/oder die Isolierstifte (30) jeweils eine Isolierhülle (25, 35) aufweisen, welche einen weichmagnetischen Kern (26, 36) umgibt und zur Seite hin magnetisch isoliert.

7. Magnetgreifer nach einem der vorangegangenen Ansprüche, wobei die mindestens zwei Greifelemente (120) bei ausgeschalteter Magnetflussquelle jeweils eine verformbare Frontfläche (123) aufweisen, welche eine Greifkontur bildet, die an die Kontur eines zu greifenden Gegenstands anpassbar ist.

8. Magnetgreifer nach Anspruch 7, wobei die mindestens zwei Greifelemente (120) durch flexible Hüllen (121) gebildet werden, welche mit einem weichmagnetischen Granulat (122) gefüllt sind, wobei bevorzugt Polstifte (12) in das Granulat hineinreichen.

9. Magnetgreifer nach einem der vorangegangenen Ansprüche, wobei die mindestens zwei Greifelemente durch Greifstifte (20) gebildet werden, welche linear beweglich am Magnetgreifer (10) angeordnet sind,
wobei die Greifstifte (20) jeweils ein Führungselement (21) umfassen, mit welchem sie linear beweglich am Magnetgreifer geführt sind,
wobei die Führungselemente (21) mindestens zweier benachbarter Greifstifte (20) unmittelbar aneinander geführt sind und/oder wobei mindestens einem Polstück (12) mehrere nebeneinander angeordnete Greifstifte (20) zugeordnet sind, deren Führungselemente (21) an einer Seitenwand (18) des Polstückes (12) geführt sind.

10. Magnetgreifer nach Anspruch 9, wobei mindestens einem Polstück (12) eine erste Gruppe von nebeneinander angeordneten Greifstifte zugeordnet ist, deren Führungselemente (21) an einer Seitenwand (18) des Polstückes (12) geführt sind, und eine zweite Gruppe von nebeneinander angeordneten Greifstiften, deren Führungselemente (21) an den Führungselementen (21) der ersten Gruppe geführt sind, und/oder
wobei der Magnetgreifer mindestens einen Isolierstift (30) mit einem Führungselement (31) aufweist, mit welchen er an einem der Polstücke (12) und/oder an Führungselementen (31) von anderen Isolierstiften (30) und/oder an Führungselementen (21) von Greifstiften (20) geführt ist.

11. Magnetgreifer nach Anspruch 9, wobei der Magnetgreifer mehrere Greifstifte (20) aufweist, deren Führungselemente (21) in einem zwischen den beiden Polstücken (12) vorgesehenem Raumbereich angeordnet sind, wobei bevorzugt jedem der beiden Polstücken (12) mindestens eine Gruppe (40, 50) von diesen Greifstiften (20) zugeordnet ist und weiter bevorzugt die beiden Gruppen (40, 50) durch eine aus einem magnetischen Isoliermaterial gefertigte Trennwand (15), welche den Raumbereich in mindestens zwei Teilräume teilt, voneinander getrennt sind.

12. Magnetgreifer nach einem der Ansprüche 9 bis 11, wobei die Führungselemente (21, 31) der Greifstifte (20) und/oder der Isolierstifte (30) aus einem weichmagnetischen Material bestehen und/oder wobei an den Führungselementen (21, 31) der Greifstifte (20) und/oder der Isolierstifte (30) Stiftelemente (22, 32) angeordnet sind, wobei deren Frontfläche bei den Greifstiften (22) eine Greiffläche des Magnetgreifers bildet, wobei die Stiftelemente (22, 32) bevorzugt einen kleineren Querschnitt aufweisen als die Führungselemente (21, 31), wobei die Stiftelemente (22, 32) bevorzugt durch Öffnungen in einem Gehäuse (17) des Magnetgreifers hindurchgehen, an welchen die Führungselemente (21, 31) zurückgehalten werden, und/oder wobei die Führungselemente (21, 31) plane Seitenflächen aufweisen, mit welchen sie aneinander und/oder an den Seitenflächen (18) der Polstücke (12) geführt sind, wobei die Führungselemente (21, 31) bevorzugt einen rechteckigen oder sechseckigen Querschnitt aufweisen.

13. Magnetgreifer nach einem der vorangegangenen Ansprüche, mit einer die Magnetflussquelle (11) und/oder Polschuhe (12) und/oder den Lagerungsbereich für die Greifstifte (20) des Magnetgreifers seitlich umgebenen, magnetisch isolierenden Einfassung (13).

14. Vorrichtung zum automatisierten Entnehmen von in einem Behälter ungeordnet angeordneten Werkstücken, mit einer Objekterkennungseinrichtung (230) zum Erfassen der Werkstücke im Behälter und einem Magnetgreifer (10) nach einem der vorangegangenen Ansprüche zum Greifen und Entnehmen der Werkstücke aus dem Behälter (220),
wobei die Vorrichtung bevorzugt weiterhin eine Handhabungsvorrichtung (210), insbesondere einen Roboter und/oder ein Linien-, Flächen- und/oder Raumportal aufweist, an welchem der Magnetgreifer (10) angeordnet ist, und/oder eine Steuerung (250) zur Auswertung der Daten der Objekterkennungseinrichtung (230), zur Pfadplanung und zur Ansteuerung der Handhabungsvorrichtung (210) und/oder des Magnetgreifers (10).

15. Verfahren zum Betrieb eines Magnetgreifers nach einem der Ansprüche 1 bis 13 und/oder einer Vorrichtung nach Anspruch 14, mit den Schritten:
- Heranfahren des Magnetgreifers (10) an einen zu greifenden Gegenstand mit ausgeschalteter Magnetflussquelle (11), so dass die Greifelemente (20, 120) durch den Kontakt mit dem Bauteil bewegt und/oder verformt werden und eine an das Bauteil angepasste Greifkontur bilden, und
- zumindest teilweises Einschalten der Magnetflussquelle (11) zum Fixieren der Greifkontur und/oder zum Greifen des Bauteils.

## Claims

1. Magnetic gripper, comprising
a switchable magnetic flux source (11),
two pole pieces (12), which are magnetically connected to the magnetic flux source (11), and
at least two gripper elements (20, 120), which are each magnetically conductively connected to one of the two pole pieces (12),
wherein the at least two gripper elements (20, 120) are movably and/or deformably arranged on the magnetic gripper when the magnetic flux source (11) is switched off, such that their front surfaces (23) form a gripping contour that can be adapted to the contour of an object to be gripped,
**characterized in that**
the magnetic gripper comprises an insulation (30, 130), which surrounds the at least two gripper elements (20, 120) and magnetically insulates them to the side.

2. Magnetic gripper according to claim 1, wherein the insulation (30, 130) is movably and/or deformably arranged on the magnetic gripper at least when the magnetic flux source (11) is switched off.

3. Magnetic gripper according to claim 1 or 2, wherein the at least two gripper elements are formed by gripper pins (20), which are movably mounted on the magnetic gripper, wherein the gripper pins (20) are preferably linearly movable and/or are preloaded into an extended position by spring elements (16).

4. Magnetic gripper according to any one of the preceding claims, wherein the insulation is formed by at least one flexible element (130), which surrounds the gripper elements (120) at the side, in particular a bellows and/or a flexible sleeve.

5. Magnetic gripper according to any one of claims 1 to 3, wherein the insulation is formed by insulating pins (30), which are movably mounted on the magnetic gripper and surround the gripper elements (20), wherein the insulating pins (30) are preferably linearly movable and/or are preloaded into an extended position by spring elements (16).

6. Magnetic gripper according to claim 3 or 5, wherein the insulation (30, 130) and/or the insulating pins (30) is/are formed in that the gripper pins (20) and/or the insulating pins (30) each comprise an insulating sleeve (25, 35), which surrounds a soft-magnetic core (26, 36) and magnetically insulates it to the side.

7. Magnetic gripper according to any one of the preceding claims, wherein the at least two gripper elements (120) each comprise a deformable front surface (123) when the magnetic flux source is switched off, which front surface forms a gripping contour that can be adapted to the contour of an object to be gripped.

8. Magnetic gripper according to claim 7, wherein the at least two gripper elements (120) are formed by flexible sleeves (121) which are filled with a soft-magnetic granulate (122), wherein pole pins (12) preferably extend into the granulate.

9. Magnetic gripper according to any one of the preceding claims, wherein the at least two gripper elements are formed by gripper pins (20) which are linearly movably arranged on the magnetic gripper (10), wherein the gripper pins (20) each comprise a guide element (21) by means of which they are linearly movably guided on the magnetic gripper, wherein the guide elements (21) of at least two adjacent gripper pins (20) are guided directly on one another and/or wherein a plurality of gripper pins (20) arranged beside one another are assigned to at least one pole piece (12), the guide elements (21) of which pins are guided on a side wall (18) of the pole piece (12).

10. Magnetic gripper according to claim 9, wherein a first group of gripper pins arranged beside one another, the guide elements (21) of which are guided on a side wall (18) of the pole piece (12), and a second group of gripper pins arranged beside one another, the guide elements (21) of which are guided on the guide elements (21) of the first group, are assigned to at least one pole piece (12), and/or wherein the magnetic gripper comprises at least one insulating pin (30) comprising a guide element (31), by means of which it is guided on one of the pole pieces (12) and/or on guide elements (31) of other insulating pins (30) and/or on guide elements (21) of gripper pins (20).

11. Magnetic gripper according to claim 9, wherein the magnetic gripper comprises a plurality of gripper pins (20), the guide elements (21) of which are arranged in a spatial region provided between the two pole pieces (12), wherein at least one group (40, 50) of these gripper pins (20) is preferably assigned to each of the two pole pieces (12) and, more preferably, the two groups (40, 50) are separated from one another by a partition wall (15), which is made of a magnetic insulating material and divides the spatial region into at least two compartments.

12. Magnetic gripper according to any one of claims 9 to 11, wherein the guide elements (21, 31) of the gripper pins (20) and/or the insulating pins (30) consist of a soft-magnetic material and/or wherein pin elements (22, 32) are arranged on the guide elements (21, 31) of the gripper pins (20) and/or the insulating pins (30), wherein the front surface of said pins forms, in the case of the gripper pins (22), a gripping surface of the magnetic gripper, wherein the pin elements (22, 32) preferably have a smaller cross section than the guide elements (21, 31), wherein the pin elements (22, 32) preferably pass through openings in a housing (17) of the magnetic gripper, on which the guide elements (21, 31) are retained, and/or wherein the guide elements (21, 31) comprise planar side surfaces, by means of which they are guided on one another and/or on the side surfaces (18) of the pole pieces (12), wherein the guide elements (21, 31) preferably have a rectangular or hexagonal cross section.

13. Magnetic gripper according to any one of the preceding claims, comprising a magnetically insulating enclosure (13) laterally surrounding the magnetic flux source (11) and/or pole shoes (12) and/or the mounting region for the gripper pins (20) of the magnetic gripper.

14. Device for the automated removal of workpieces arranged in a disordered manner in a container, comprising an object-recognition apparatus (230) for detecting the workpieces in the container and a magnetic gripper (10) according to any one of the preceding claims for gripping and removing the workpieces from the container (220), wherein the device preferably also comprises a handling device (210), in particular a robot and/or a linear gantry, area gantry and/or room gantry, on which the magnetic gripper (10) is arranged, and/or a controller (250) for evaluating the data from the object-recognition apparatus (230), for path planning and for actuating the handling device (210) and/or the magnetic gripper (10).

15. Method for operating a magnetic gripper according to any one of claims 1 to 13 and/or a device according to claim 14, comprising the steps of:
- moving the magnetic gripper (10) up to an object to be gripped with the magnetic flux source (11) switched off, such that the gripper elements (20, 120) are moved and/or deformed by the contact with the component and form a gripping contour adapted to the component, and
- at least partially switching on the magnetic flux source (11) to fix the gripping contour and/or to grip the component.

## Revendications

1. Préhenseur magnétique comprenant une source de flux magnétique commutable (11), deux pièces polaires (12) en liaison magnétique avec la source de flux magnétique (11), et au moins deux éléments de préhension (20, 120) qui sont chacun en liaison magnétiquement conductrice avec l'une des deux pièces polaires (12), les au moins deux éléments de préhension (20, 120) étant disposés de manière mobile et/ou déformable sur le préhenseur magnétique lorsque la source de flux magnétique (11) est désactivée, de sorte qu'ils forment, avec leurs faces frontales (23), un contour de préhension qui est adaptable au contour d'un objet à saisir, **caractérisé en ce que** le préhenseur magnétique comprend une isolation (30, 130) qui entoure les au moins deux éléments de préhension (20, 120) et les isole magnétiquement latéralement.

2. Préhenseur magnétique selon la revendication 1, l'isolation (30, 130) étant disposée de manière mobile et/ou déformable sur le préhenseur magnétique au moins lorsque la source de flux magnétique (11) est désactivée.

3. Préhenseur magnétique selon la revendication 1 ou 2, les au moins deux éléments de préhension étant formés par des tiges de préhension (20) qui sont montées de manière mobile sur le préhenseur magnétique, les tiges de préhension (20) étant de préférence mobiles linéairement et/ou précontraintes dans une position sortie par des éléments de ressort (16).

4. Préhenseur magnétique selon l'une des revendications précédentes, l'isolation étant formée par au moins un élément flexible (130) qui entoure latéralement les éléments de préhension (120), en particulier un soufflet et/ou une enveloppe flexible.

5. Préhenseur magnétique selon l'une des revendications 1 à 3, l'isolation étant formée par des tiges isolantes (30) qui sont montées de manière mobile sur le préhenseur magnétique et entourent les éléments de préhension (20), les tiges isolantes (30) étant de préférence mobiles linéairement et/ou précontraintes dans une position sortie par des éléments de ressort (16).

6. Préhenseur magnétique selon la revendication 3 ou 5, l'isolation (30, 130) et/ou les tiges isolantes (30) étant formée(s) en ce que les tiges de préhension (20) et/ou les tiges isolantes (30) présentent chacune une enveloppe isolante (25, 35) qui entoure un noyau magnétique doux (26, 36) et l'isole magnétiquement latéralement.

7. Préhenseur magnétique selon l'une des revendications précédentes, les au moins deux éléments de préhension (120) présentant chacun, lorsque la source de flux magnétique est désactivée, une face frontale déformable (123) qui forme un contour de préhension adaptable au contour d'un objet à saisir.

8. Préhenseur magnétique selon la revendication 7, les au moins deux éléments de préhension (120) étant formés par des enveloppes flexibles (121) qui sont remplies d'un granulé magnétique doux (122), des tiges polaires (12) s'étendant de préférence dans le granulé.

9. Préhenseur magnétique selon l'une des revendications précédentes, les au moins deux éléments de préhension étant formés par des tiges de préhension (20) qui sont disposées de manière mobile linéairement sur le préhenseur magnétique (10), les tiges de préhension (20) comprenant chacune un élément de guidage (21) au moyen duquel elles sont guidées de manière mobile linéairement sur le préhenseur magnétique, les éléments de guidage (21) d'au moins deux tiges de préhension (20) voisines étant guidés directement l'un contre l'autre et/ou plusieurs tiges de préhension (20) disposées côte à côte étant associées à au moins une pièce polaire (12), leurs éléments de guidage (21) étant guidés sur une paroi latérale (18) de la pièce polaire (12).

10. Préhenseur magnétique selon la revendication 9, un premier groupe de tiges de préhension disposées côte à côte étant associé à au moins une pièce polaire (12), leurs éléments de guidage (21) étant guidés sur une paroi latérale (18) de la pièce polaire (12), et un second groupe de tiges de préhension disposées côte à côte, dont les éléments de guidage (21) sont guidés sur les éléments de guidage (21) du premier groupe, et/ou le préhenseur magnétique présentant au moins une tige isolante (30) pourvue d'un élément de guidage (31) au moyen duquel elle est guidée sur l'une des pièces polaires (12) et/ou sur des éléments de guidage (31) d'autres tiges isolantes (30) et/ou sur des éléments de guidage (21) de tiges de préhension (20).

11. Préhenseur magnétique selon la revendication 9, le préhenseur magnétique présentant plusieurs tiges de préhension (20) dont les éléments de guidage (21) sont disposés dans une zone d'espace prévue entre les deux pièces polaires (12), au moins un groupe (40, 50) de ces tiges de préhension (20) étant de préférence associé à chacune des deux pièces polaires (12) et, de manière encore préférée, les deux groupes (40, 50) étant séparés l'un de l'autre par une cloison (15) réalisée en un matériau magnétiquement isolant qui divise la zone d'espace en au moins deux sous-espaces.

12. Préhenseur magnétique selon l'une des revendications 9 à 11, les éléments de guidage (21, 31) des tiges de préhension (20) et/ou des tiges isolantes (30) étant constitués d'un matériau magnétique doux et/ou des éléments de tige (22, 32) étant disposés sur les éléments de guidage (21, 31) des tiges de préhension (20) et/ou des tiges isolantes (30), leur face frontale, dans le cas des tiges de préhension (22), formant une surface de préhension du préhenseur magnétique, les éléments de tige (22, 32) présentant de préférence une section transversale plus petite que les éléments de guidage (21, 31), les éléments de tige (22, 32) traversant de préférence des ouvertures dans un boîtier (17) du préhenseur magnétique au niveau desquelles les éléments de guidage (21, 31) sont retenus, et/ou les éléments de guidage (21, 31) présentant des faces latérales planes au moyen desquelles ils sont guidés les uns contre les autres et/ou contre les faces latérales (18) des pièces polaires (12), les éléments de guidage (21, 31) présentant de préférence une section transversale rectangulaire ou hexagonale.

13. Préhenseur magnétique selon l'une des revendications précédentes, avec un encadrement magnétiquement isolant (13) entourant latéralement la source de flux magnétique (11) et/ou des épanouissements polaires (12) et/ou la zone de logement pour les tiges de préhension (20) du préhenseur magnétique.

14. Dispositif de prélèvement automatisé de pièces disposées de manière désordonnée dans un récipient, comprenant un dispositif de reconnaissance d'objets (230) pour détecter les pièces dans le récipient et un préhenseur magnétique (10) selon l'une des revendications précédentes pour saisir et prélever les pièces hors du récipient (220), le dispositif comprenant de préférence en outre un dispositif de manipulation (210), en particulier un robot et/ou un portique linéaire, surfacique et/ou spatial, sur lequel le préhenseur magnétique (10) est disposé, et/ou une commande (250) pour l'évaluation des données du dispositif de reconnaissance d'objets (230), pour la planification de trajectoire et pour le pilotage du dispositif de manipulation (210) et/ou du préhenseur magnétique (10).

15. Procédé de fonctionnement d'un préhenseur magnétique selon l'une des revendications 1 à 13 et/ou d'un dispositif selon la revendication 14, comprenant les étapes suivantes : rapprochement du préhenseur magnétique (10) d'un objet à saisir avec la source de flux magnétique (11) désactivée, de sorte que les éléments de préhension (20, 120) sont déplacés et/ou déformés par le contact avec le composant et forment un contour de préhension adapté au composant, et activation au moins partielle de la source de flux magnétique (11) pour fixer le contour de préhension et/ou pour saisir le composant.
